# EUROPEAN PATENT SPECIFICATION

(11) **EP 3 988 846 B1**
(45) Date of publication and mention of the grant of the patent: **27.12.2023**
(21) Application number: 21202301.4
(22) Date of filing: 12.10.2021
(51) Int. Cl.: F23R 3/34, F23R 3/28

(54) **INTEGRATED COMBUSTION NOZZLE HAVING A UNIFIED HEAD END**
INTEGRIERTE VERBRENNUNGSDÜSE MIT EINEM EINHEITLICHEN KOPFENDE
BUSE DE COMBUSTION INTÉGRÉE DOTÉE D'UNE EXTRÉMITÉ DE TÊTE UNIFIÉE

(30) Priority: 26.10.2020 US 202017079847
(43) Date of publication of application: 27.04.2022
(73) Proprietor: General Electric Technology GmbH, 5400 Baden (CH)
(72) Inventor: BERRY, Jonathan Dwight, Greenville, 29615 (US); HUGHES, Michael John, Greenville, 29615 (US)
(74) Representative: Novagraaf Group

(56) References cited:
- US-B2- 10 520 194
- US-B2- 10 584 876

## Description

### FIELD

The present disclosure relates generally to an integrated combustion nozzle for a gas turbine engine. More specifically, this disclosure relates to a compact integrated combustion nozzle having a unified two stage combustion system.

### BACKGROUND

Turbomachines are utilized in a variety of industries and applications for energy transfer purposes. For example, a gas turbine engine generally includes a compressor section, a combustion section, a turbine section, and an exhaust section. The compressor section progressively increases the pressure of a working fluid entering the gas turbine engine and supplies this compressed working fluid to the combustion section. The compressed working fluid and a fuel (e.g., natural gas) mix within the combustion section and burn in a combustion chamber to generate high pressure and high temperature combustion gases. The combustion gases flow from the combustion section into the turbine section where they expand to produce work. For example, expansion of the combustion gases in the turbine section may rotate a rotor shaft connected, e.g., to a generator to produce electricity. The combustion gases then exit the gas turbine via the exhaust section.

Turbomachine combustion systems usually burn hydrocarbon fuels and produce air polluting emissions such as oxides of nitrogen (NOx) and carbon monoxide (CO). Oxidization of molecular nitrogen in the turbomachine depends upon the temperature of gas located in a combustor, as well as the residence time for reactants located in the highest temperature regions within the combustor. Thus, the amount of NOx produced by the turbomachine may be reduced or controlled by either maintaining the combustor temperature below a temperature at which NOx is produced, or by limiting the residence time of the reactant in the combustor.

One approach for controlling the temperature of the combustor involves pre-mixing fuel and air to create a fuel-air mixture prior to combustion. This approach may include the axial staging of fuel injectors where a first fuel-air mixture is injected and ignited at a first or primary combustion zone of the combustor to produce a main flow of high energy combustion gases, and where a second fuel-air mixture is injected into and mixed with the main flow of high energy combustion gases via a plurality of radially oriented and circumferentially spaced fuel injectors or axially staged fuel injector assemblies positioned downstream from the primary combustion zone. The injection of the second fuel-air mixture into the secondary combustion zone is sometimes referred to as a "jet-in-crossflow" arrangement.

Axially staged injection increases the likelihood of complete combustion of available fuel, which in turn reduces the air polluting emissions. However, with conventional axially staged fuel injection combustion systems, there are multiple components having complex geometries that are difficult and time consuming to assemble. Thus, scaling the axially staged combustors, e.g., from a large combustor to a small combustor, can be difficult due to the room required for the assembly. Therefore, an improved gas turbine combustion system which includes axially staged fuel injection and is capable of being fully scaled would be useful in the industry.

An integrated combustion nozzle according to the prior art is described by US10520194B2.

### BRIEF DESCRIPTION

Aspects and advantages of the integrated combustion nozzles and turbomachines in accordance with the present disclosure will be set forth in part in the following description, or may be obvious from the description, or may be learned through practice of the technology.

In accordance with one embodiment, an integrated combustion nozzle is provided. The integrated combustion nozzle includes a combustion liner that extends along a radial direction between an inner liner segment and an outer liner segment. The combustion liner includes a forward end portion axially separated from an aft end portion. The combustion liner further includes a first side wall and a second side wall. The aft end portion of the combustion liner defines a turbine nozzle. The first side wall and the second side wall each define an opening that extends both axially and radially. The integrated combustion nozzle further includes a unified head end coupled to the combustion liner. The unified head end is in fluid communication with a fuel supply. The unified head end includes a first fuel nozzle and a second fuel nozzle disposed at the forward end portion of the combustion liner. A fuel plenum is defined between the first fuel nozzle and the second fuel nozzle. A first liner portion extends from the first fuel nozzle and into the opening of the first wall such that the first liner portion forms a continuous surface with the first wall of the combustion liner. The unified head end further includes a second liner portion that extends from the second fuel nozzle and into the opening of the second wall such that the second liner portion forms a continuous surface with the second wall of the combustion liner.

In accordance with another embodiment, a turbomachine is provided. The turbomachine includes a compressor section and a compressor discharge casing disposed downstream from the compressor section. A turbine section is disposed downstream from the compressor discharge casing. The turbomachine further includes an annular combustion system disposed within the compressor discharge casing. The annular combustion system includes a plurality of integrated combustion nozzles disposed in an annular array about an axial centerline of the turbomachine. Each integrated combustion nozzle includes a combustion liner extending along a radial direction between an inner liner segment and an outer liner segment. The combustion liner includes a forward end portion axially separated from an aft end portion. The combustion liner further includes a first side wall and a second side wall. The aft end portion of the combustion liner defines a turbine nozzle. The first side wall and the second side wall each define an opening that extends both axially and radially. The integrated combustion nozzle further includes a unified head end coupled to the combustion liner. The unified head end is in fluid communication with a fuel supply. The unified head end includes a first fuel nozzle and a second fuel nozzle disposed at the forward end portion of the combustion liner. A fuel plenum is defined between the first fuel nozzle and the second fuel nozzle. A first liner portion extends from the first fuel nozzle and into the opening of the first wall such that the first liner portion forms a continuous surface with the first wall of the combustion liner. The unified head end further includes a second liner portion that extends from the second fuel nozzle and into the opening of the second wall such that the second liner portion forms a continuous surface with the second wall of the combustion liner.

These and other features, aspects and advantages of the present integrated combustion nozzles and turbomachines will become better understood with reference to the following description and appended claims. The accompanying drawings, which are incorporated in and constitute a part of this specification, illustrate embodiments of the technology and, together with the description, serve to explain the principles of the technology.

### BRIEF DESCRIPTION OF THE DRAWINGS

A full and enabling disclosure of the present integrated combustion nozzles and turbomachines, including the best mode of making and using the present systems and methods, directed to one of ordinary skill in the art, is set forth in the specification, which makes reference to the appended figures, in which:
FIG. 1 is a schematic illustration of a turbomachine, in accordance with embodiments of the present disclosure;
FIG. 2 is an upstream view of an exemplary combustion section of a turbomachine, in accordance with embodiments of the present disclosure;
FIG. 3 is an upstream cross-sectional view of a portion of a combustion section of a turbomachine, in accordance with embodiments of the present disclosure;
FIG. 4 is a cross-sectional perspective view of a portion of a combustion section of a turbomachine, in accordance with embodiments of the present disclosure;
FIG. 5 is a perspective view of a portion of a compressor discharge casing, in accordance with embodiments of the present disclosure;
FIG. 6 is a perspective view of an integrated combustion nozzle, as viewed from a first side, in accordance with embodiments of the present disclosure;
FIG. 7 is a perspective view of an integrated combustion nozzle, as viewed from a second side, in accordance with embodiments of the present disclosure;
FIG. 8 is a perspective view of an integrated combustion nozzle, which is shown having a unified head end exploded away, in accordance with embodiments of the present disclosure;
FIG. 9 is a cross-sectional view of an integrated combustion nozzle from along a circumferential direction C of a gas turbine, in accordance with embodiments of the present disclosure; and
FIG. 10 is a perspective cross-sectional view of an integrated combustion nozzle, in accordance with embodiments of the present disclosure.

### DETAILED DESCRIPTION

Reference now will be made in detail to embodiments of the present integrated combustion nozzles and turbomachines, one or more examples of which are illustrated in the drawings. Each example is provided by way of explanation, rather than limitation of, the technology. Features illustrated or described as part of one embodiment can be used with another embodiment to yield a still further embodiment. Thus, it is intended that the present disclosure covers such modifications and variations as come within the scope of the appended claims.

The detailed description uses numerical and letter designations to refer to features in the drawings. Like or similar designations in the drawings and description have been used to refer to like or similar parts of the invention. As used herein, the terms "first", "second", and "third" may be used interchangeably to distinguish one component from another and are not intended to signify location or importance of the individual components.

As used herein, the terms "upstream" (or "forward") and "downstream" (or "aft") refer to the relative direction with respect to fluid flow in a fluid pathway. For example, "upstream" refers to the direction from which the fluid flows, and "downstream" refers to the direction to which the fluid flows. The term "radially" refers to the relative direction that is substantially perpendicular to an axial centerline of a particular component, the term "axially" refers to the relative direction that is substantially parallel and/or coaxially aligned to an axial centerline of a particular component and the term "circumferentially" refers to the relative direction that extends around the axial centerline of a particular component, terms of approximation, such as "generally," "substantially," or "about" include values within ten percent greater or less than the stated value. When used in the context of an angle or direction, such terms include within ten degrees greater or less than the stated angle or direction. For example, "generally vertical" includes directions within ten degrees of vertical in any direction, e.g., clockwise or counter-clockwise.

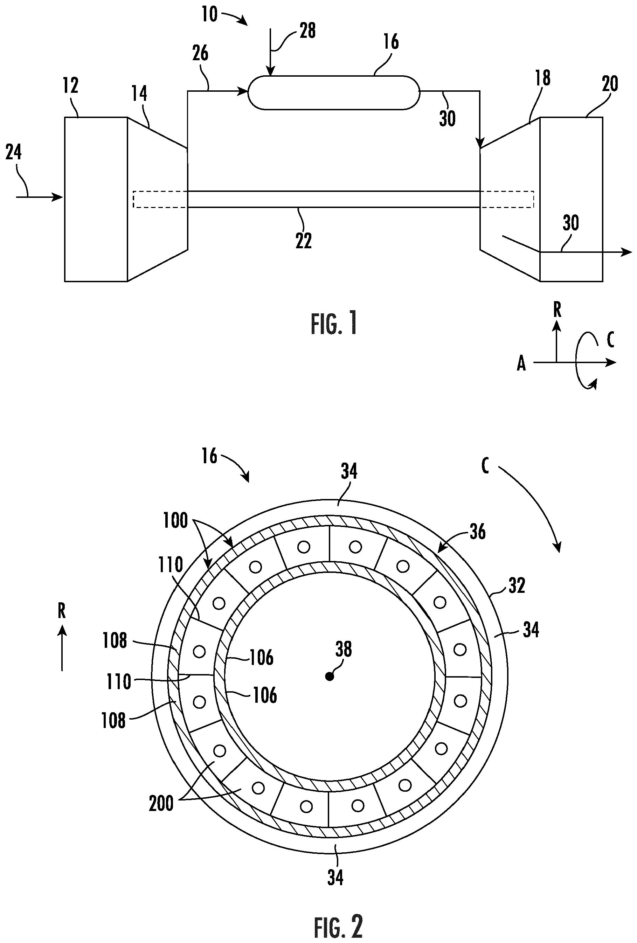

Referring now to the drawings, FIG. 1 illustrates a schematic diagram of one embodiment of a turbomachine, which in the illustrated embodiment is a gas turbine 10. Although an industrial or land-based gas turbine is shown and described herein, the present disclosure is not limited to a land based and/or industrial gas turbine unless otherwise specified in the claims. For example, the invention as described herein may be used in any type of turbomachine including but not limited to a steam turbine, an aircraft gas turbine, or a marine gas turbine.

As shown, the gas turbine 10 generally includes an inlet section 12, a compressor 14 disposed downstream of the inlet section 12, a combustion section 16 disposed downstream of the compressor 14, a turbine 18 disposed downstream of the combustion section 16, and an exhaust section 20 disposed downstream of the turbine 18. Additionally, the gas turbine 10 may include one or more shafts 22 that couple the compressor 14 to the turbine 18.

During operation, air 24 flows through the inlet section 12 and into the compressor 14 where the air 24 is progressively compressed, thus providing compressed air 26 to the combustion section 16. At least a portion of the compressed air 26 is mixed with a fuel 28 within the combustion section 16 and burned to produce combustion gases 30. The combustion gases 30 flow from the combustion section 16 into the turbine 18, wherein energy (kinetic and/or thermal) is transferred from the combustion gases 30 to rotor blades (not shown), thus causing shaft 22 to rotate. The mechanical rotational energy may then be used for various purposes, such as to power the compressor 14 and/or to generate electricity. The combustion gases 30 exiting the turbine 18 may then be exhausted from the gas turbine 10 via the exhaust section 20.

Also shown in FIG. 1 is the shaft 22 which is coincident with the axial centerline 38 (FIG. 2). The axial centerline 38 defines an axial direction substantially parallel to and/or along an axial direction A, a radial direction R perpendicular to the axial direction A, and a circumferential direction C extends around the axial direction A.

FIG. 2 provides an upstream view of the combustion section 16, according to various embodiments of the present disclosure. As shown in FIG. 2, the combustion section 16 may be at least partially surrounded by an outer or compressor discharge casing 32. The compressor discharge casing 32 may at least partially define a high pressure plenum 34 that at least partially surrounds various components of the combustor 16. The high pressure plenum 34 may be in fluid communication with the compressor 14 (FIG. 1) so as to receive the compressed air 26 therefrom. In various embodiments, as shown in FIG. 2, the combustion section 16 includes a segmented annular combustion system 36 that includes a number of integrated combustion nozzles 100 arranged circumferentially around an axial centerline 38 of the gas turbine 10, which may be coincident with the gas turbine shaft 22.

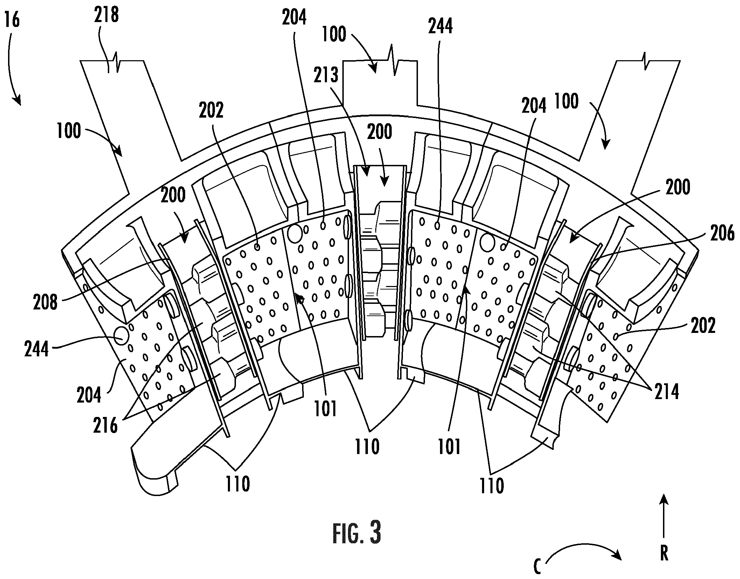

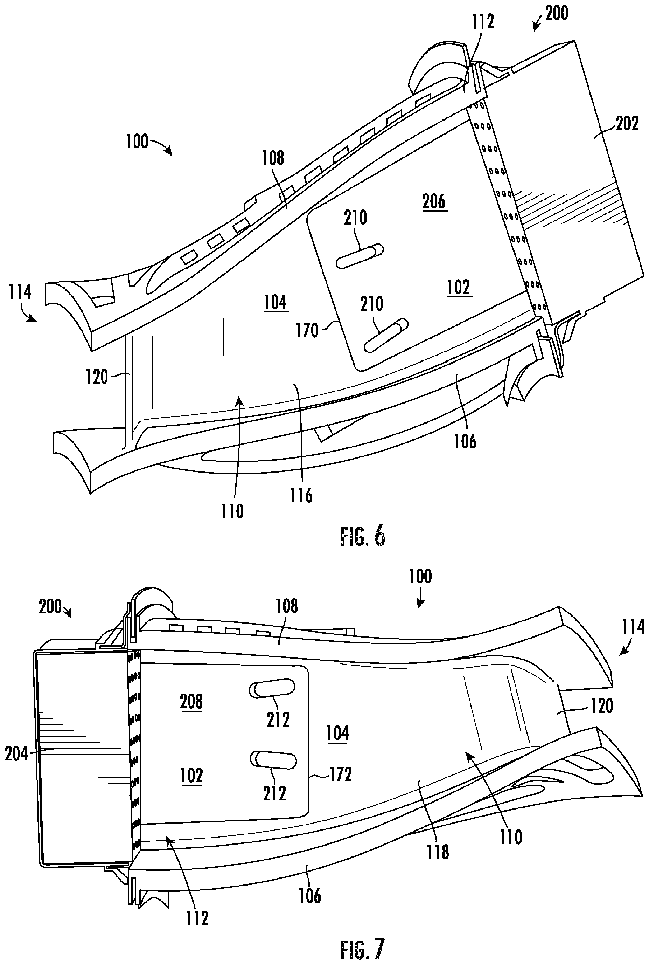

FIG. 3 illustrates a cross-sectional view of a portion of the combustor section 16, as viewed from along the axial direction A of the gas turbine 10, in accordance with embodiments of the present disclosure. As shown in FIG. 3, each integrated combustion nozzle 100 (three of which are shown in FIG. 3), may couple together to form localized combustion zones 101, which are isolated from one another and disposed upstream of the turbine section 18, e.g., the primary combustion zone 102 and the secondary combustion zone 104 (FIGS. 6 and 7). Although FIG. 3 illustrates three integrated combustion nozzles 100, the combustion section 16 may include enough integrated combustion nozzles 100 to circumferentially surround the axial centerline 38 of the gas turbine 10 (FIG.2).

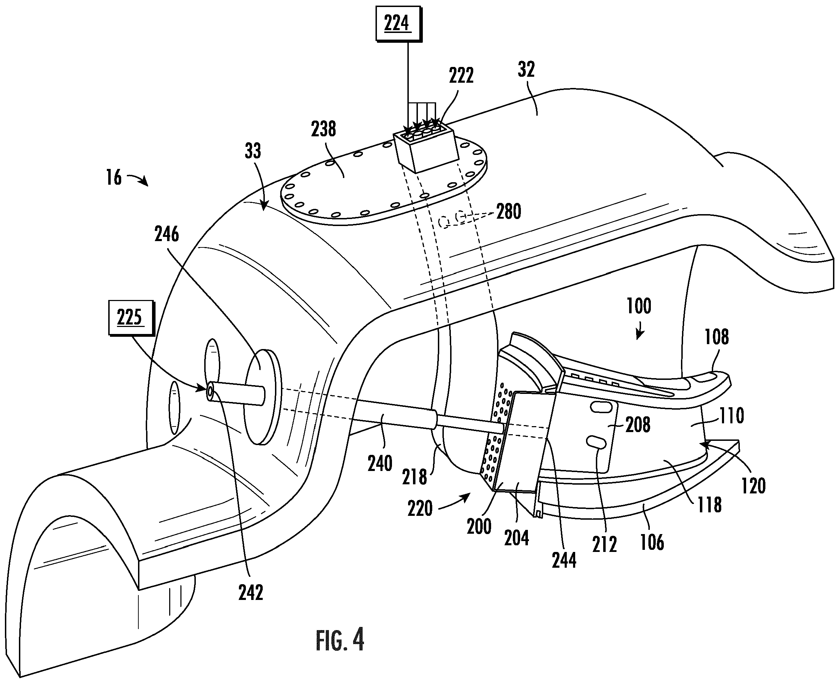

In exemplary embodiments, as shown in FIG. 3, each of the integrated combustion nozzles 100 may include a combustion liner 110 and a unified head end 200 that couples to the forward end of the combustion liner 110. As discussed below in more detail, each unified head end 200 may be in fluid communication with a fuel supply 224 (FIG. 4) and may include a first fuel nozzle 202, a second fuel nozzle 204, and a fuel injection assembly 213 positioned downstream from the first fuel nozzle 202 and the second fuel nozzle 204. As shown, the first fuel nozzle 202 of each unified head end 200 may be positioned immediately adjacent, and in contact with, the second fuel nozzle 204 of a neighboring unified head end 200, in order to inject a first combustible mixture of fuel and air into the localized combustion zone 101. In various embodiments, the fuel injection assembly 213 may include a first set of fuel injectors 214 and a second set of fuel injectors 216 disposed downstream from the fuel nozzles 202, 204 and operable to inject a second combustible flow of fuel and air into two separate localized combustion zones 101.

In many embodiments, the first set of fuel injectors 214 and the second set of fuel injectors 216 may be oriented opposite one another, such that they each extend through opposite ends of the unified head end 200 and into respective localized combustion zones 101, in order to inject a second combustible mixture of fuel and air into two separate neighboring localized combustion zones 101.

As shown in FIGS. 3-8 collectively, the unified head end 200 may further include a first liner portion 206 and a second liner portion 208, which extend from the first fuel nozzle 202 and the second fuel nozzle 204 respectively. In many embodiments, the first liner portion 206 may define pressure side injection outlets 210, through which the first set of fuel injectors 214 extend, in order to inject a second flow of fuel and air into the localized combustion zone 101. Similarly, the second liner portion 208 may define suction side injection outlets 212, through which the second set of fuel injectors 216 extend, in order to inject a second flow of fuel and air into the localized combustion zone 101. In this way, the first set of fuel injectors 214 of a unified head end 200 and the second set of fuel injectors 216 of an immediately neighboring unified head end 200 may extend into a common localized combustion zone 101.

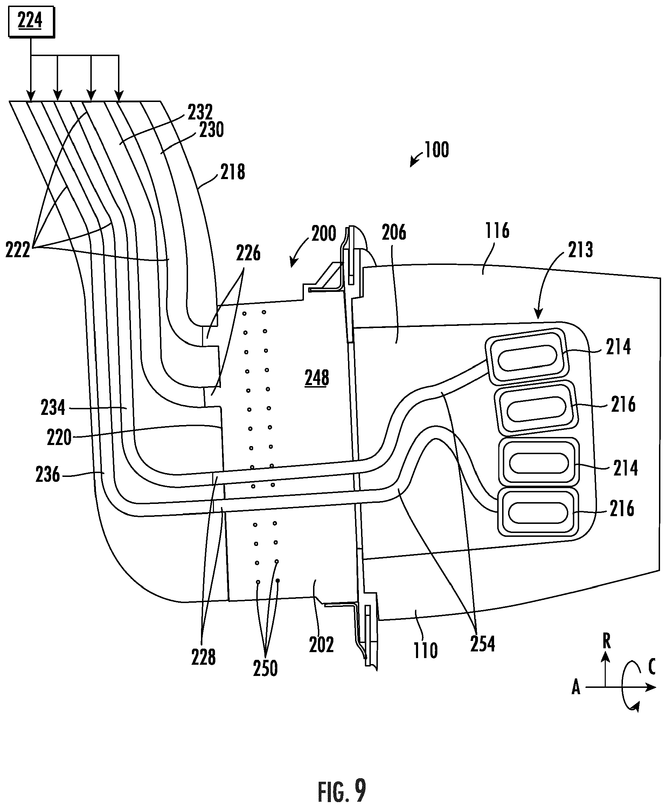

FIG. 4 illustrates a perspective cross-sectional view of a portion the combustion section 16. As shown, a support tube 218 may couple the integrated combustion nozzle 100 to the compressor discharge casing 32. In particular embodiments, the support tube 218 may be a hollow body that surrounds at least one fuel conduit. For example, in many embodiments, the support tube 218 may couple to a forward end 220 of the unified head end 200. In various embodiments, the support tube 218 may extend from the forward end 220 of the unified head end 200, through the compressor discharge casing 32, in order to provide a protected path for the fuel supply conduits 222 to extend. In some embodiments, a flange 238 may couple the support tube 218 to an outer surface 33 of the compressor discharge casing 32. In exemplary embodiments, the support tube 218 may surround at least one fuel supply conduit 222. The at least one fuel supply conduit 222 may be fluidly coupled to a forward end 220 of the head end assembly 200, such as coupled to one of a fuel nozzle inlet 226 or a fuel injector inlet 228 (FIG. 9) at the forward end 220 of the head end assembly 200.

In many embodiments, a liquid fuel cartridge 240 may extend through one of the first fuel nozzle 202 or the second fuel nozzle 204. For example, as shown in FIG. 4, the liquid fuel cartridge 240 extends through the second fuel nozzle 204, in order to inject a flow of liquid fuel into the localized combustion zone 101. In particular embodiments, the liquid fuel cartridge may extend from an inlet 242, through the compressor discharge casing 32 and one of the first fuel nozzle 202 or the second fuel nozzle 204, to an outlet 244 disposed within the localized combustion zone 101. As shown, the liquid fuel cartridge 240 may be coupled to the compressor discharge casing 32 via a mounting flange 246. In particular embodiments, the liquid fuel cartridge 240 may be coupled to the outer surface 33 of the compressor discharge casing 32 via the mounting flange 246. In some embodiments, as shown, the liquid fuel cartridge 240 may be in fluid communication with a liquid fuel supply 225 in order to convey a flow of liquid fuel into the combustion chamber. In other embodiments, the liquid fuel cartridge may be in fluid communication with the fuel supply 224.

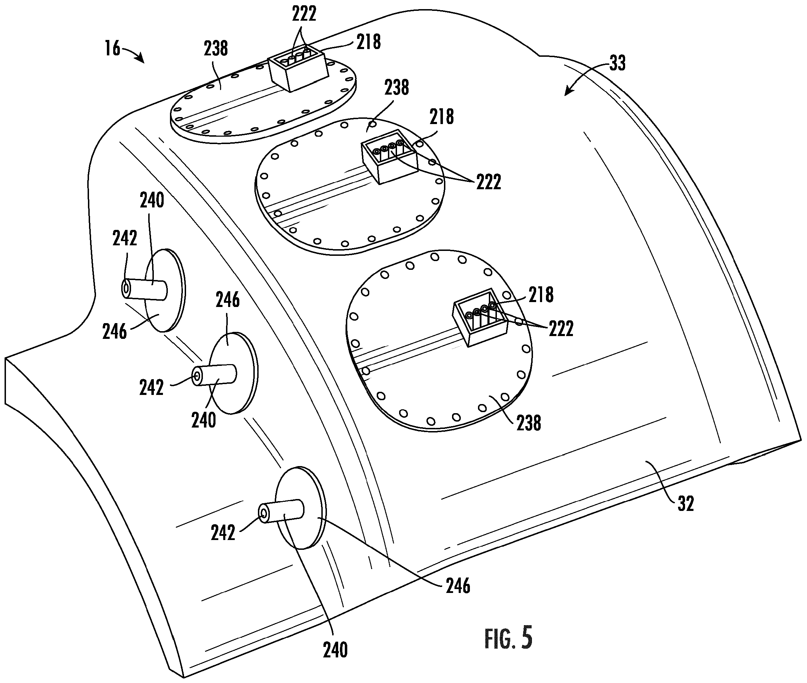

FIG. 5 illustrates a perspective view of a portion of the combustion section 16, in accordance with embodiments of the present disclosure. As shown, each of the liquid fuel cartridges 240 may be circumferentially spaced apart from one another and coupled to the compressor discharge casing 32, such that they each extend through the compressor discharge casing 32 and into a respective localized combustion zone 101. Similarly, each of the support tubes 218 may be circumferentially spaced apart from one another and coupled to the compressor discharge casing via the flange 238, such that they each extend from the compressor discharge casing to a respective integrated combustion nozzle 100. In this way, each of the support tubes 218 may provide a protective path for the at least one fluid supply conduits 222 that advantageously shields the conduits from the heat of the combustion section 16.

FIG. 6 provides a perspective view of an integrated combustion nozzle 100, as viewed from a first side. Similarly, FIG. 7 provides a perspective view of an integrated combustion nozzle 100, as viewed from a second side, in accordance with embodiments of the present disclosure. As shown collectively in FIGS. 2, 3 and 4, the segmented annular combustion system 36 includes a plurality of integrated combustion nozzles 100. As described further herein, each combustor nozzle 100 includes a first side wall 116 and a second side wall 118. In particular embodiments, the first side wall is a pressure side wall, while the second side wall is a suction side wall, based on the integration of the side walls with corresponding pressure and suction sides of a downstream turbine nozzle 120. It should be understood that any references made herein to pressure side walls and suction side walls are representative of particular embodiments, such references being made to facilitate discussion, and that such references are not intended to limit the scope of any embodiment, unless specific context dictates otherwise.

As shown collectively in FIGS. 6 and 7, each circumferentially adjacent pair of combustor nozzles 100 defines a respective primary combustion zone 102 and a respective secondary combustion zone 104 therebetween, thereby forming an annular array of primary combustion zones 102 and secondary combustion zones 104. The primary combustion zones 102 and the secondary combustion zones 104 are circumferentially separated, or fluidly isolated, from adjacent primary combustion zones 102 and secondary combustion zones 104, respectively, by the combustion liners 110.

Each combustor nozzle 100 includes an inner liner segment 106, an outer liner segment 108, and a hollow or semi-hollow combustion liner 110 that extends between the inner liner segment 106 and the outer liner segment 108. It is contemplated that more than one (e.g., 2, 3, 4, or more) combustion liners 110 may be positioned between the inner liner segment 106 and the outer liner segment 108, thereby reducing the number of joints between adjacent liner segments that require sealing. For ease of discussion herein, reference will be made to integrated combustion nozzles 100 having a single combustion liner 110 between respective inner and outer liner segments 106, 108, although a 2:1 ratio of liner segments to combustion liners is not required. As shown in FIGS. 6 and 7, each combustion liner 110 includes forward or upstream end portion 112, an aft or downstream end portion 114, a first side wall 116, which is a pressure side wall in the particular example embodiment illustrated in FIG. 6 and a second side wall 118, which is a suction side wall in the particular example embodiment illustrated in FIG. 7.

The integrated combustion nozzle 100 further includes a unified head end 200 coupled to the combustion liner 110 at the forward end 112. In the illustrated example embodiment, the unified head end 200 includes a first fuel injector 202 and a second fuel injector 204. As shown, the unified head end 204 is configured for installation in the forward end portion 112 of a respective combustion liner 110. As shown in FIG. 3, when the integrated combustion nozzle 100 is installed within a combustion section 16, the first fuel injector 202 may contact the second fuel injector 204 of an adjacent integrated combustion nozzle 100, in order to collectively form the upstream end of a localized combustion zone 101. The first fuel injector 202 and the second fuel injector 204 may be referred to as a "bundled tube fuel nozzle." However, the fuel nozzles 202, 204 may include or comprise any type of fuel nozzle or burner (such as a swirling fuel nozzle or swozzle), and the claims should be not limited to a bundled tube fuel nozzle unless specifically recited as such.

Each of the fuel nozzles 202, 204 may extend at least partially circumferentially between two circumferentially adjacent combustion liners 110 and/or at least partially radially between a respective inner liner segment 106 and outer liner segment 108 of the respective combustor nozzle 100. During axially staged fuel injection operation, fuel nozzles 202, 204 each provide a stream of premixed fuel and air (that is, a first combustible mixture) to the respective primary combustion zone 102.

As shown in FIGS. 6 and 7, the downstream end portion 114 of one or more of the combustion liners 110 transitions into a generally airfoil-shaped turbine nozzle 120, which directs and accelerates the flow of combustion products toward the turbine blades. Thus, the downstream end portion 114 of each combustion liner 110 may be considered an airfoil without a leading edge. When the integrated combustion nozzles 100 are mounted within the combustion section 16, the turbine nozzle 120 may be positioned immediately upstream from a stage of turbine rotor blades of the turbine 18.

As used herein, the term "integrated combustion nozzle" refers to a seamless structure that includes the combustion liner 110, the turbine nozzle 120 downstream of the combustion liner, the inner liner segment 106 extending from the forward end 112 of the combustion liner 110 to the aft end 114 (embodied by the turbine nozzle 120), and the outer liner segment 108 extending from the forward end 112 of the combustion liner 110 to the aft end 114 (embodied by the turbine nozzle 120). The turbine nozzle 120 of the integrated combustion nozzle 100 functions as a first-stage turbine nozzle and is positioned upstream from a first stage of turbine rotor blades.

As described above, one or more of the integrated combustion nozzles 100 is formed as an integral, or unitary, structure or body that includes the inner liner segment 106, the outer liner segment 108, the combustion liner 110, and the turbine nozzle 120. The integrated combustion nozzle 100 may be made as an integrated or seamless component, via casting, additive manufacturing (such as 3D printing), or other manufacturing techniques. By forming the combustor nozzle 100 as a unitary or integrated component, the need for seals between the various features of the combustor nozzle 100 may be reduced or eliminated, part count and costs may be reduced, and assembly steps may be simplified or eliminated. In other embodiments, the combustor nozzle 100 may be fabricated, such as by welding, or may be formed from different manufacturing techniques, where components made with one technique are joined to components made by the same or another technique.

In particular embodiments, at least a portion or all of each integrated combustion nozzle 100 may be formed from a ceramic matrix composite (CMC) or other composite material. In other embodiments, a portion or all of each integrated combustion nozzle 100 and, more specifically, the turbine nozzle 120 or its trailing edge, may be made from a material that is highly resistant to oxidation (e.g., coated with a thermal barrier coating).

In some turbomachines, at least one of the combustion liners 110 may taper to a trailing edge that is aligned with a longitudinal (axial) axis of the combustion liner 110. That is, the combustion liner 110 may not be integrated with a turbine nozzle 120. In these embodiments, it may be desirable to have an uneven count of combustion liners 110 and turbine nozzles 120. The tapered combustion liners 110 (i.e., those without integrated turbine nozzles 120) may be used in an alternating or some other pattern with combustion liners 110 having integrated turbine nozzles 120 (i.e., integrated combustion nozzles 100).

As shown in FIGS. 6 and 7, the unified head end 200 further includes a first liner portion 206 and a second liner portion 208. The first liner portion 206 and the second liner portion 208 may each extend generally axially from the unified head end 200 and at least partially form the primary combustion zone 102. For example, the first liner portion 206 may extend from the first fuel nozzle 202, such that it aligns with, and forms a continuous surface with, the pressure side wall 116. Similarly, the second liner portion 208 may extend from the second fuel nozzle 204, such that it aligns with, and forms a continuous surface with, the suction side wall 118.

In many embodiments, as shown in FIG. 6, the first liner portion 206 of each unified head end 200 may define one or more pressure side injection outlets 210, through which a first set of fuel injectors 214 may extend in order to inject a second combustible mixture of fuel and air into the secondary combustion zone 104. Likewise, as shown in FIG. 7, the second liner portion 208 of each unified head end 200 may define one or more suction side injection outlets 212, through which a second set of fuel injectors 216 may extend in order to inject a second combustible mixture of fuel and air into the secondary combustion zone 104. Each respective primary combustion zone 102 is defined upstream from the corresponding pressure side injection outlets 210 and/or suction side injection outlets 212 of a pair of circumferentially adjacent integrated combustion nozzles 100. Each secondary combustion zone 104 is defined downstream from the corresponding pressure side injection outlets 210 and/or suction side injection outlets 212 of the pair of circumferentially adjacent integrated combustion nozzles 100.

Although the pressure side injection outlets 210 are shown in FIGS. 6 and 7 as residing in a common radial or injection plane with respect to an axial centerline of the integrated combustion nozzle 100 or at a common axial distance from the downstream end portion 114 of the combustion liner 110, in particular embodiments, one or more of the pressure side injection outlets 210 may be staggered axially with respect to radially adjacent pressure side injection outlets 210, thereby off-setting the axial distances of the pressure side injection outlets 210 to the downstream end portion 114 for particular pressure side injection outlets 210. Similarly, although FIG. 7 illustrates the suction side injection outlets 212 in a common radial or injection plane or at a common axial distance from the downstream end portion 114 of the combustion liner 110, in particular embodiments, one or more of the suction side injection outlets 212 may be staggered axially with respect to radially adjacent suction side injection outlets 212, thereby off-setting the axial distances of the pressure side injection outlets 212 to the downstream end portion 114 for particular suction side injection outlets 212.

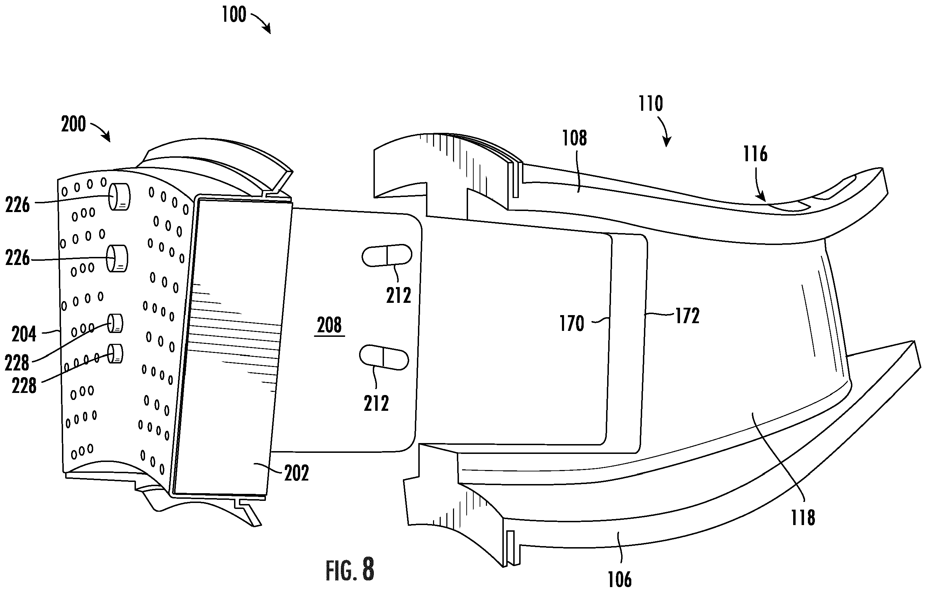

FIG. 8 illustrates a perspective view of an integrated combustion nozzle 100, in which the combustion liner 110 is exploded away from the unified head end 200, in accordance with embodiments of the present disclosure. As shown, the combustion liner 110 defines openings 170 and 172, in order for the unified head end 200 to couple thereto and partially define the primary combustion zone 102 and secondary combustion zone 104. More specifically, the pressure side wall 116 defines an opening 170, which may be a generally rectangular shaped cut out that corresponds to the shape of the first liner portion 206. Likewise, the suction side wall 118 defines an opening 172, which may be a generally rectangular shaped cut out that corresponds to the shape of the second liner portion 208. In many embodiments, the first liner portion 206 may be slidably received by the opening 170 of the pressure side wall 116, and the second liner portion 208 may be slidably received by the opening 172 of the suction side wall 118.

When the unified head end 200 is in an installed position (FIGS. 6 and 7), the first liner portion 206 may form a continuous surface with the pressure side wall 116, such that there are no sharp changes in the contour between the pressure side wall 116 and the first liner portion 206. In many embodiments, the first liner portion 206 may be a substantially flat plate that extends both radially and axially and corresponds to the shape of the opening 170. For example, the first liner portion may fill the opening 170, in order to partially define both the primary combustion zone 102 and the secondary combustion zone 104. Likewise, when the unified head end 200 is in an installed position, the second liner portion 208 may form a continuous surface with the suction side wall 118, such that there are no sharp changes in the contour between the suction side wall 118 and the second liner portion 208. In many embodiments, the second liner portion 208 may be a substantially flat plate that extends both radially and axially and corresponds to the shape of the opening 172. For example, the second liner portion 208 may fill the opening 172, in order to partially define both the primary combustion zone 102 and the secondary combustion zone 104.

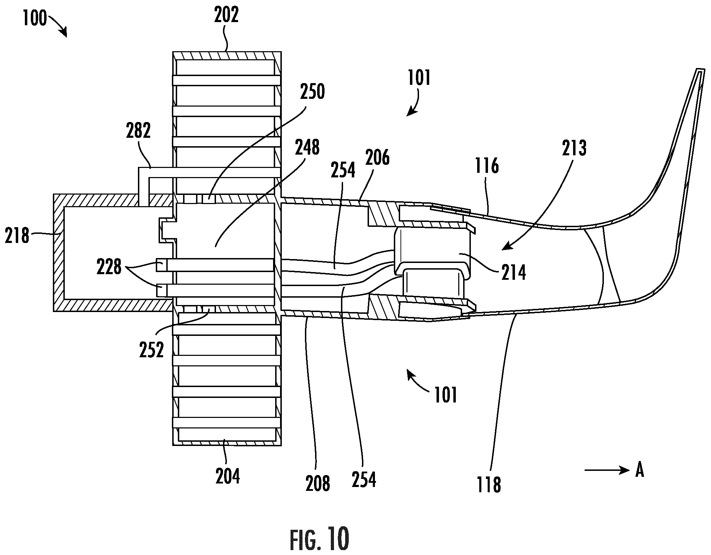

FIG. 9 illustrates a cross-sectional view of an integrated combustion nozzle 100 from along the circumferential direction C of the gas turbine 10 (circumferentially between the pressure side wall 116 and the suction side wall 118), and FIG. 10 illustrates a cross-sectional view of an integrated combustion nozzle 100 from along the radial direction R, in accordance with embodiments of the present disclosure. As shown in FIGS. 9 and 10 collectively, the fuel injection assembly 213 may be positioned downstream from the first fuel nozzle 202 and the second fuel nozzle 204, such that the fuel injection assembly advantageously provides a second flow of fuel and air into the combustion chamber.

The unified head end 200 further defines a fuel plenum 248 axially between the forward end 220 of the unified head end 200 and the fuel injection assembly 213. The fuel plenum 248 is defined between the first fuel nozzle 202 and the second fuel nozzle 204 in the circumferential direction C.

In various embodiments, as shown in FIG. 9, the at least one fuel supply conduit 222 may include a first fuel nozzle supply conduit 230 coupled to a fuel nozzle inlet 226 at a forward end 220 of the unified head end 200, a second fuel nozzle supply conduit 232 coupled to another fuel nozzle inlet 226 at the forward end 220 of the unified head end 200, a first fuel injector supply conduit 234 coupled to a fuel injector inlet 228 at the forward end 220 of the unified head end 200, and a second fuel injector supply conduit 236 coupled to another fuel injector inlet 228 at the forward end 220 of the unified head end 200.

In many embodiments, the support tube 218 may surround each of the conduits 230, 232, 234, 236, such that the support tube 218 provides for a thermal barrier between the high temperature compressed air 26 in the high pressure plenum 34 and the conduits 230, 232, 234, 236 containing cold temperature fuel. In exemplary embodiments, each of the conduits 230, 232, 234, 236 may be a solid hollow tube, i.e. they do not include a compliant bellows, which advantageously reduces both component cost and assembly time.

As shown in FIG. 9, the fuel nozzle inlet 226 may be defined by the unified head end 200. In many embodiments, fuel nozzle inlet 226 may be in fluid communication with both the fuel supply 224 and the fuel plenum 248, such that fuel from the fuel supply 224 is delivered to the fuel plenum 248 via the fuel inlet 226. As shown in FIGS. 9 and 10 collectively, a first plurality of fuel ports 250 may extend between the fuel plenum 248 and the first fuel nozzle 202, such that the first fuel nozzle 202 is in fluid communication with the fuel plenum 248 via the first plurality of fuel ports 250. Similarly, a second plurality of fuel ports 252 may extend between the fuel plenum 248 and the second fuel nozzle 204, such that the second fuel nozzle 204 is in fluid communication with the fuel plenum 248 via the second plurality of fuel ports 252.

In exemplary embodiments, as shown in FIGS. 9 and 10 collectively, the unified head end 200 may define at least one fuel circuit 254 in fluid communication with the fuel supply 224 and the fuel injection assembly 213. As shown, the at least one fuel circuit 224 may from a fuel injector inlet 228 through the fuel plenum to the fuel injection assembly. In the embodiment shown in FIGS. 9 and 10, the unified head end 200 includes two fuel circuits 254 that provide for fluid communication between the fuel supply 224 and the fuel injection assembly 213, e.g., one fuel circuit 254 may convey fuel to the first set of fuel injectors 214 while another fuel circuit 254 conveys fuel to the second set of fuel injectors 216. In other embodiments (not shown), the unified head end 200 may include more or less fuel circuits depending on the number of fuel injectors.

In many embodiments, the unified head end may be integrally formed as a single component. That is, each of the subcomponents, e.g., the fuel nozzles 202, 204, liner portions 206, 208, fuel injection assembly 213, and any other subcomponent of the unified head end 200, may be manufactured together as a single body. In exemplary embodiments, this may be done by utilizing an additive manufacturing system. However, in other embodiments, other manufacturing techniques, such as casting or other suitable techniques, may be used. In this regard, utilizing additive manufacturing methods, each unified head end 200 may be integrally formed as a single piece of continuous metal, and may thus include fewer sub-components and/or joints compared to prior designs. The integral formation of each unified head end 200 through additive manufacturing may advantageously improve the overall assembly process. For example, the integral formation reduces the number of separate parts that must be assembled, thus reducing associated time and overall assembly costs. Additionally, existing issues with, for example, leakage, joint quality between separate parts, and overall performance may advantageously be reduced.

The unified head end 200 described herein defines both the primary form of fuel/air delivery to the combustion zone and the secondary form of fuel/air delivery to the combustion zone. Specifically, the unified head end 200 may define both the fuel nozzles 202, 204, the fuel injection assembly 213, and the means for conveying fuel from a fuel supply 224 to said fuel nozzles 202, 204 and fuel injection assembly 213. Thus, the overall integrated combustion nozzle 100 may be relatively simple and quick to assemble compared to prior designs, at least due to the reduction of separate, individualized, components. In addition, since the unified head end 200 is a single component, the integrated combustor nozzle 100 may be scaled to much more compact sizes than in previous designs due to the ease of assembly. For example, rather than including multiple individualized components that require room for assembly relative to one another, the unified head end 100 is a singular component that may be include only a few assembly steps.

In addition, the support tube 218 advantageously provides for thermal protection barrier for the fuel supply conduits 222, thereby allowing for the use of solid hollow tubes (as opposed to bellows tubes), which reduces both part and assembly costs. Further, the support tube 218 may define one or more air inlets 280. For example, the one or more air inlets 280 may be defined on the support tube 218 within the compressor discharge casing 32 (at a location proximate the flange 238), such that compressed air flows into the support tube 218 at the one or more air inlets 280. The one or more air inlets 280 may be in fluid communication with the high pressure plenum 34. Compressed air may flow through the support tube 218 and exit at an outlet or outlet tube 282 (as shown in FIG. 10). The outlet tube 282 may extend from the support tube 218, through one of the first fuel nozzle 202 or the second fuel nozzle 204 to the combustion zone 101. In this way, purge air may flow from the air inlet 280, through the interior of the support tube 218, to the air outlet tube 282 and be ejected at the combustion zone 101, which may advantageously purge or sweep away any leaked fuel from the fuel supply conduits 222 into the combustion zone 101.

## Claims

1. An integrated combustion nozzle (100), comprising:
a combustion liner (110) extending along a radial direction (R) between an inner liner segment (106) and an outer liner segment (108), the combustion liner (110) including a forward end portion axially separated from an aft end portion, a first side wall (116), and a second side wall (118), the aft end portion of the combustion liner (110) defining a turbine nozzle, wherein the first side wall (116) and the second side wall (118) each defining a respective opening (170, 172) that extends both axially and radially;
a unified head end (200) coupled to the combustion liner (110), the unified head end (200) being suitable to be in fluid communication with a fuel supply (224), wherein the unified head end (200) comprises:
a first fuel nozzle (202) and a second fuel nozzle (204) disposed at the forward end portion of the combustion liner (110), wherein a fuel plenum (248) is defined between the first fuel nozzle (202) and the second fuel nozzle (204);
a first liner portion (206) that extends from the first fuel nozzle (202) and into the respective opening (170, 172) of the first side wall (116) such that the first liner portion (206) forms a continuous surface with the first side wall (116) of the combustion liner (110);
a second liner portion (208) that extends from the second fuel nozzle (204) and into the respective opening (170, 172) of the second side wall (118) such that the second liner portion (208) forms a continuous surface with the second side wall (118) of the combustion liner (110).

2. The integrated combustion nozzle (100) as in claim 1, further comprising a fuel injection assembly (213) positioned downstream from the first fuel nozzle (202) and the second fuel nozzle (204).

3. The integrated combustion nozzle (100) as in claim 2, wherein the fuel injection assembly (213) comprises a first set of fuel injectors (214) extending through the first liner portion (206) of the unified head end (200) and a second set of fuel injectors (216) extending through the second liner portion (208) of the unified head end (200).

4. The integrated combustion nozzle (100) as in claim 2, wherein the unified head end (200) defines at least one fuel circuit (254) in fluid communication with the fuel supply (224) and the fuel injection assembly (213), the at least one fuel circuit (254) extending from a fuel injector inlet (228) through the fuel plenum (248) to the fuel injection assembly (213).

5. The integrated combustion nozzle (100) as in claim 1, wherein the unified head end (200) defines a fuel nozzle inlet (226) in fluid communication with a fuel supply (224) and the fuel plenum (248).

6. The integrated combustion nozzle (100) as in claim 1, further comprising a support tube (218) that couples the integrated combustion nozzle (100) to a compressor discharge casing (32).

7. The integrated combustion nozzle (100) as in claim 6, wherein the support tube (218) surrounds at least one fuel supply (224) conduit, the fuel supply (224) conduit fluidly coupled to one of a fuel nozzle inlet (226) or a fuel injector inlet (228) at a forward end of the head end assembly.

8. The integrated combustion nozzle (100) as in claim 7, wherein the support tube (218) defines at least one air inlet in fluid communication with a high pressure plenum defined within the compressor discharge casing (32), wherein an air outlet tube extends from the support tube (218) through one of the first fuel nozzle (202) or the second fuel nozzle (204) to the combustion zone, and wherein purge air flows through the interior of the support tube (218) from the one or more air inlets to the air outlet tube.

9. The integrated combustion nozzle (100) as in claim 1, further comprising a liquid fuel cartridge that extends through one of the first fuel nozzle (202) or the second fuel nozzle (204).

10. The integrated combustion nozzle (100) as in claim 9, wherein the liquid fuel cartridge is coupled to the compressor discharge casing (32) via a mounting flange.

11. A turbomachine (10) comprising:
a compressor section (14);
a compressor discharge casing (32) disposed downstream from the compressor section (14);
a turbine section (18) disposed downstream from the compressor discharge casing (32);
an annular combustion system (36) disposed within the compressor discharge casing (32), the annular combustion system (36) including a plurality of integrated combustion nozzles (100) disposed in an annular array about an axial centerline of the turbomachine (10), wherein each integrated combustion nozzle (100) is an integrate combustion nozzle according to claim 1.

12. The turbomachine (10) as in claim 11, further comprising a fuel injection assembly (213) (213) positioned downstream from the first fuel nozzle (202) and the second fuel nozzle (204).

13. The turbomachine (10) as in claim 12, wherein the fuel injection assembly (213) comprises a first set of fuel injectors (214) extending through the first liner portion (206) of the unified head end (200) and a second set of fuel injectors (216) extending through the second liner portion (208) of the unified head end (200).

14. The turbomachine (10) as in claim 12, wherein the unified head end (200) defines at least one fuel circuit (254) in fluid communication with the fuel supply (224) and the fuel injection assembly (213), the at least one fuel circuit (254) extending from a fuel injector inlet (228) through the fuel plenum (248) to the fuel injection assembly (213).

15. The turbomachine (10) as in claim 11, wherein the unified head end (200) defines a fuel nozzle inlet (226) in fluid communication with a fuel supply (224) and the fuel plenum (248).

## Patentansprüche

1. Integrierte Verbrennungsdüse (100), umfassend:
eine Brennkammerauskleidung(110), die sich entlang einer radialen Richtung (R) zwischen einem inneren Auskleidungssegment (106) und einem äußeren Auskleidungssegment (108) erstreckt, wobei die Brennkammerauskleidung (110) einen vorderen Endabschnitt, der von einem hinteren Endabschnitt axial getrennt ist, eine erste Seitenwand (116) und eine zweite Seitenwand (118) einschließt, wobei der hintere Endabschnitt der Brennkammerauskleidung (110) eine Turbinendüse definiert, wobei die erste Seitenwand (116) und die zweite Seitenwand (118) jede eine jeweilige Öffnung (170, 172) definieren, die sich sowohl axial als auch radial erstreckt;
ein einheitliches Kopfende (200), das mit der Brennkammerauskleidung (110) gekoppelt ist, wobei das einheitliche Kopfende (200) geeignet ist, um mit einer Brennstoffzufuhr (224) in Fluidverbindung zu sein, wobei das einheitliche Kopfende (200) umfasst:
eine erste Brennstoffdüse (202) und eine zweite Brennstoffdüse (204), die an dem vorderen Endabschnitt der Brennkammerauskleidung (110) arrangiert sind, wobei ein Brennstoffplenum (248) zwischen der ersten Brennstoffdüse (202) und der zweiten Brennstoffdüse (204) definiert ist;
einen ersten Auskleidungsabschnitt (206), der sich von der ersten Brennstoffdüse (202) und in die jeweilige Öffnung (170, 172) der ersten Seitenwand (116) erstreckt, derart, dass der erste Auskleidungsabschnitt (206) eine fortlaufende Oberfläche mit der ersten Seitenwand (116) der Brennkammerauskleidung (110) bildet;
einen zweiten Auskleidungsabschnitt (208), der sich von der zweiten Brennstoffdüse (204) und in die jeweilige Öffnung (170, 172) der zweiten Seitenwand (118) erstreckt, derart, dass der zweite Auskleidungsabschnitt (208) eine fortlaufende Oberfläche mit der zweiten Seitenwand (118) der Brennkammerauskleidung (110) bildet.

2. Integrierte Verbrennungsdüse (100) nach Anspruch 1, ferner umfassend eine Brennstoffeinspritzanordnung (213), die stromabwärts der ersten Brennstoffdüse (202) und der zweiten Brennstoffdüse (204) positioniert ist.

3. Integrierte Verbrennungsdüse (100) nach Anspruch 2, wobei die Brennstoffeinspritzanordnung (213) einen ersten Satz von Brennstoffeinspritzdüsen (214), die sich durch den ersten Auskleidungsabschnitt (206) des einheitlichen Kopfendes (200) erstrecken, und einen zweiten Satz von Brennstoffeinspritzdüsen (216), die sich durch den zweiten Auskleidungsabschnitt (208) des einheitlichen Kopfendes (200) erstrecken, umfasst.

4. Integrierte Verbrennungsdüse (100) nach Anspruch 2, wobei das einheitliche Kopfende (200) mindestens einen Brennstoffkreis (254) in Fluidverbindung mit der Brennstoffzufuhr (224) und der Brennstoffeinspritzanordnung (213) definiert, wobei sich der mindestens eine Brennstoffkreis (254) von einem Brennstoffeinspritzeinlass (228) durch das Brennstoffplenum (248) zu der Brennstoffeinspritzanordnung (213) erstreckt.

5. Integrierte Verbrennungsdüse (100) nach Anspruch 1, wobei das einheitliche Kopfende (200) einen Brennstoffdüseneinlass (226) in Fluidverbindung mit einer Brennstoffzufuhr (224) und dem Brennstoffplenum (248) definiert.

6. Integrierte Verbrennungsdüse (100) nach Anspruch 1, ferner umfassend ein Stützrohr (218), das die integrierte Verbrennungsdüse (100) mit einem Verdichterausstoßgehäuse (32) koppelt.

7. Integrierte Verbrennungsdüse (100) nach Anspruch 6, wobei das Stützrohr (218) mindestens eine Brennstoffzufuhr(224)-Leitung umgibt, wobei die Brennstoffzufuhr(224)-Leitung mit einem eines Brennstoffdüseneinlasses (226) oder eines Brennstoffeinspritzdüseneinlasses (228) an einem vorderen Ende der Kopfendanordnung fluidisch gekoppelt ist.

8. Integrierte Verbrennungsdüse (100) nach Anspruch 7, wobei das Stützrohr (218) mindestens einen Lufteinlass in Fluidverbindung mit einem Hochdruckplenum definiert, das innerhalb des Verdichterausstoßgehäuses (32) definiert ist, wobei sich ein Luftauslassrohr von dem Stützrohr (218) durch eine der ersten Brennstoffdüse (202) oder der zweiten Brennstoffdüse (204) zu der Verbrennungszone erstreckt, und wobei Spülluft durch das Innere des Stützrohrs (218) von dem einen oder den mehreren Lufteinlässen zu dem Luftauslassrohr strömt.

9. Integrierte Verbrennungsdüse (100) nach Anspruch 1, ferner umfassend eine Flüssigbrennstoffkartusche, die sich durch eine der ersten Brennstoffdüse (202) oder der zweiten Brennstoffdüse (204) erstreckt.

10. Integrierte Verbrennungsdüse (100) nach Anspruch 9, wobei die Flüssigbrennstoffkartusche über einen Montageflansch mit dem Verdichterausstoßgehäuse (32) gekoppelt ist.

11. Turbomaschine (10), umfassend:
einen Verdichterbereich (14);
ein Verdichterausstoßgehäuse (32), das stromabwärts des Verdichterbereichs (14) arrangiert ist;
einen Turbinenbereich (18), der stromabwärts des Verdichterausstoßgehäuses (32) arrangiert ist;
ein ringförmiges Verbrennungssystem (36), das innerhalb des Verdichterausstoßgehäuses (32) arrangiert ist, wobei das ringförmige Verbrennungssystem (36) eine Vielzahl von integrierten Verbrennungsdüsen (100) einschließt, die in einem ringförmigen Array um eine axiale Mittellinie der Turbomaschine (10) arrangiert sind, wobei jede integrierte Verbrennungsdüse (100) eine Integrierte Verbrennungsdüse nach Anspruch 1 ist.

12. Turbomaschine (10) nach Anspruch 11, ferner umfassend eine Brennstoffeinspritzanordnung (213) (213), die stromabwärts der ersten Brennstoffdüse (202) und der zweiten Brennstoffdüse (204) positioniert ist.

13. Turbomaschine (10) nach Anspruch 12, wobei die Brennstoffeinspritzanordnung (213) einen ersten Satz von Brennstoffeinspritzdüsen (214), die sich durch den ersten Auskleidungsabschnitt (206) des einheitlichen Kopfendes (200) erstrecken, und einen zweiten Satz von Brennstoffeinspritzdüsen (216), die sich durch den zweiten Auskleidungsabschnitt (208) des einheitlichen Kopfendes (200) erstrecken, umfasst.

14. Turbomaschine (10) nach Anspruch 12, wobei das einheitliche Kopfende (200) mindestens einen Brennstoffkreis (254) in Fluidverbindung mit der Brennstoffzufuhr (224) und der Brennstoffeinspritzanordnung (213) definiert, wobei sich der mindestens eine Brennstoffkreis (254) von einem Brennstoffeinspritzeinlass (228) durch das Brennstoffplenum (248) zu der Brennstoffeinspritzanordnung (213) erstreckt.

15. Turbomaschine (10) nach Anspruch 11, wobei das einheitliche Kopfende (200) einen Brennstoffdüseneinlass (226) in Fluidverbindung mit einer Brennstoffzufuhr (224) und dem Brennstoffplenum (248) definiert.

## Revendications

1. Buse de combustion intégrée (100), comprenant :
une chemise de combustion (110) s'étendant le long d'une direction radiale (R) entre un segment de chemise interne (106) et un segment de chemise externe (108), la chemise de combustion (110) comportant une partie d'extrémité avant axialement séparée d'une partie d'extrémité arrière, une première paroi latérale (116) et une seconde paroi latérale (118), la partie d'extrémité arrière de la chemise de combustion (110) définissant une tuyère de turbine, dans laquelle la première paroi latérale (116) et la seconde paroi latérale (118) définissant chacune une ouverture respective (170, 172) qui s'étend à la fois axialement et radialement ;
une extrémité de tête unifiée (200) accouplée à la chemise de combustion (110), l'extrémité de tête unifiée (200) étant adaptée pour être en communication fluidique avec une alimentation en carburant (224), dans laquelle l'extrémité de tête unifiée (200) comprend :
une première buse de carburant (202) et une seconde buse de carburant (204) disposées au niveau de la partie d'extrémité avant de la chemise de combustion (110), dans laquelle une chambre de carburant (248) est définie entre la première buse de carburant (202) et la seconde buse de carburant buse (204) ;
une première partie de chemise (206) qui s'étend depuis la première buse de carburant (202) et dans l'ouverture respective (170, 172) de la première paroi latérale (116) de telle sorte que la première partie de chemise (206) forme une surface continue avec la première paroi latérale (116) de la chemise de combustion (110) ;
une seconde partie de chemise (208) qui s'étend depuis la seconde buse de carburant (204) et dans l'ouverture respective (170, 172) de la seconde paroi latérale (118) de telle sorte que la seconde partie de chemise (208) forme une surface continue avec la seconde paroi latérale (118) de la chemise de combustion (110).

2. Buse de combustion intégrée (100) selon la revendication 1, comprenant en outre un ensemble d'injection de carburant (213) positionné en aval de la première buse de carburant (202) et de la seconde buse de carburant (204).

3. Buse de combustion intégrée (100) selon la revendication 2, dans laquelle l'ensemble d'injection de carburant (213) comprend un premier ensemble d'injecteurs de carburant (214) s'étendant à travers la première partie de chemise (206) de l'extrémité de tête unifiée (200) et un second ensemble d'injecteurs de carburant (216) s'étendant à travers la seconde partie de chemise (208) de l'extrémité de tête unifiée (200).

4. Buse de combustion intégrée (100) selon la revendication 2, dans laquelle l'extrémité de tête unifiée (200) définit au moins un circuit de carburant (254) en communication fluidique avec l'alimentation en carburant (224) et l'ensemble d'injection de carburant (213), l'au moins un circuit de carburant (254) s'étendant depuis une entrée d'injecteur de carburant (228) à travers la chambre de carburant (248) jusqu'à l'ensemble d'injection de carburant (213).

5. Buse de combustion intégrée (100) selon la revendication 1, dans laquelle l'extrémité de tête unifiée (200) définit une entrée de buse de carburant (226) en communication fluidique avec une alimentation en carburant (224) et la chambre de carburant (248).

6. Buse de combustion intégrée (100) selon la revendication 1, comprenant en outre un tube support (218) qui accouple la buse de combustion intégrée (100) à un carter de refoulement de compresseur (32).

7. Buse de combustion intégrée (100) selon la revendication 6, dans laquelle le tube support (218) entoure au moins un conduit d'alimentation en carburant (224), le conduit d'alimentation en carburant (224) étant raccordé fluidiquement à l'une parmi une entrée de buse de carburant (226) ou une entrée d'injecteur de carburant (228) au niveau d'une extrémité avant de l'ensemble d'extrémité de tête.

8. Buse de combustion intégrée (100) selon la revendication 7, dans laquelle le tube support (218) définit au moins une entrée d'air en communication fluidique avec une chambre haute pression définie à l'intérieur du carter de refoulement de compresseur (32), dans laquelle un tube de sortie d'air s'étend depuis le tube support (218) à travers l'une parmi la première buse de carburant (202) ou la seconde buse de carburant (204) jusqu'à la zone de combustion, et dans laquelle l'air de purge s'écoule à travers l'intérieur du tube support (218) depuis la ou les entrées d'air jusqu'au tube de sortie d'air.

9. Buse de combustion intégrée (100) selon la revendication 1, comprenant en outre une cartouche de combustible liquide qui s'étend à travers l'une parmi la première buse de carburant (202) ou la seconde buse de carburant (204).

10. Buse de combustion intégrée (100) selon la revendication 9, dans laquelle la cartouche de combustible liquide est accouplée au carter de refoulement de compresseur (32) par l'intermédiaire d'une bride de fixation.

11. Turbomachine (10) comprenant :
une section de compresseur (14) ;
un carter de refoulement de compresseur (32) disposé en aval de la section de compresseur (14) ;
une section de turbine (18) disposée en aval du carter de refoulement de compresseur (32) ;
un système de combustion annulaire (36) disposé à l'intérieur du carter de refoulement de compresseur (32), le système de combustion annulaire (36) comportant une pluralité de buses de combustion intégrées (100) disposées dans un réseau annulaire autour d'une ligne centrale axiale de la turbomachine (10), dans laquelle chaque buse de combustion intégrée (100) est une buse de combustion intégrée selon la revendication 1.

12. Turbomachine (10) selon la revendication 11, comprenant en outre un ensemble d'injection de carburant (213) (213) positionné en aval de la première buse de carburant (202) et de la seconde buse de carburant (204).

13. Turbomachine (10) selon la revendication 12, dans laquelle l'ensemble d'injection de carburant (213) comprend un premier ensemble d'injecteurs de carburant (214) s'étendant à travers la première partie de chemise (206) de l'extrémité de tête unifiée (200) et un second ensemble d'injecteurs de carburant (216) s'étendant à travers la seconde partie de chemise (208) de l'extrémité de tête unifiée (200).

14. Turbomachine (10) selon la revendication 12, dans laquelle l'extrémité de tête unifiée (200) définit au moins un circuit de carburant (254) en communication fluidique avec l'alimentation en carburant (224) et l'ensemble d'injection de carburant (213), l'au moins un circuit de carburant (254) s'étendant depuis une entrée d'injecteur de carburant (228) à travers la chambre de carburant (248) jusqu'à l'ensemble d'injection de carburant (213).

15. Turbomachine (10) selon la revendication 11, dans laquelle l'extrémité de tête unifiée (200) définit une entrée de buse de carburant (226) en communication fluidique avec une alimentation en carburant (224) et la chambre de carburant (248).
